(19) Europäisches Patentamt
European Patent Office
Office européen des brevets

(11) Veröffentlichungsnummer: **0 027 221**
**B1**

(12) # EUROPÄISCHE PATENTSCHRIFT

(45) Veröffentlichungstag der Patentschrift: **13.04.83**

(51) Int. Cl.³: **B 29 D 11/00**, C 08 F 220/28, C 08 F 220/14, G 02 B 1/04

(21) Anmeldenummer: **80106020.3**

(22) Anmeldetag: **04.10.80**

(54) **Kontaktlinsen aus Methacrylsäuremethylester-Copolymerisaten.**

(30) Priorität: **13.10.79 DE 2941586**

(43) Veröffentlichungstag der Anmeldung: **22.04.81 Patentblatt 81/16**

(45) Bekanntmachung des Hinweises auf die Patenterteilung: **13.04.83 Patentblatt 83/15**

(84) Benannte Vertragsstaaten: **AT BE CH DE FR GB IT LI NL SE**

(56) Entgegenhaltungen:
**FR-A-2 181 065**
**GB-A-1 478 455**
**GB-A-2 000 160**

(73) Patentinhaber: **BAYER AG, Zentralbereich Patente, Marken und Lizenzen, D-5090 Leverkusen 1, Bayerwerk (DE)**

(72) Erfinder: **Wingler, Frank, Dr., Walter-Flex-Strasse 17, D-5090 Leverkusen 1 (DE)**
Erfinder: **Leusner, Bernd, Dr., Grüner Weg 148, D-5090 Leverkusen (DE)**
Erfinder: **Schwabe, Peter, Dr., Dudweiler Strasse 17, D-5090 Leverkusen 1 (DE)**
Erfinder: **Geyer, Otto-Christian, Dr., Bahnhofstrasse 12, D-6330 Wetzlar (DE)**

EP 0 027 221 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Kontaktlinsen aus Methacrylsäuremethylester-Copolymerisaten

Die Erfindung betrifft Augen-Kontaktlinsen und -Kontaktschalen aus speziellen Copolymerisaten des Methacrylsäuremethylesters und die Verwendung dieser Copolymerisate zur Herstellung von lichtbrechenden, halbharten, nur geringe Mengen Wasser aufnehmenden Materialien für die Kontaktaugenoptik.

In der Kontakt-Augenoptik werden bereits eine Reihe von verschiedenen Polymeren eingesetzt. Die Materialien sitzen unmittelbar auf der Hornhaut und beeinflussen daher wesentlich die Stoffwechselvorgänge sowie den Sauerstoffhaushalt. Durch den Kontakt können mechanische sowie chemische Reizeinwirkungen der Materialien direkt auf das Auge erfolgen.

Kontaktlinsen werden im allgemeinen in zwei Haupttypen eingeteilt, nämlich in harte Linsen und in hydrophile weiche Linsen. Linsen der ersten Art sind schon seit vielen Jahren bekannt und werden üblicherweise aus Polymethylmethacrylat hergestellt, das geschnitten und poliert werden kann, wodurch Linsen mit guten optischen Eigenschaften erhalten werden. Harte Polymethylmethacrylat-Linsen haben jedoch den bekannten Nachteil, daß sie die Hornhaut und das Innere des Augenlides reizen. Wenn ein Patient harte Linsen tragen soll, dann erfordert dies daher eine erhebliche Eingewöhnungszeit, während der der Patient die Linsen in allmählich zunehmenden Zeiträumen trägt, bis zu einem Maximum von einem etwa achtstündigen kontinuierlichen Tragen.

Aufgrund dieses Mangels der harten Linsen werden sie nur von einem geringen Teil von Brillenträgern angewendet.

In den letzten Jahren sind nun weiche Kontaktlinsen eingeführt werden, die aus Hydrogelen von hydrophilen Polymeren bestehen. Durch sie konnte das Problem der Augenreizung zum großen Teil überwunden werden, so daß die Patienten sich nunmehr an das Tragen von Kontaktlinsen viel rascher anpaßten.

Weiche hydrophile Linsenmaterialien auf Basis von Hydroxyethylmethacrylat und/oder Vinylpyrrolidon besitzen aufgrund ihrer Hydrophilie zwar anfänglich einen größeren Tragekomfort als harte Linsen, haben aber den enormen Nachteil, daß sich in ihnen Stoffwechselprodukte ablagern und Bakterien, Sporen oder Pilze eindringen und somit eine Infektion des Auges hervorrufen können. Auch bei Verwendung von nicht hydrophilen Materialien, wie z. B. von Silicongummi (US-Patent 3 996 189) traten in einigen Fällen Augenschäden auf, die ihre Ursache in auswandernden chemischen Bestandteilen und in ihrer Lipophilie haben können bzw. durch Veränderung der Oberflächenbeschaffenheit verursacht werden.

Eine Zwischenstellung zwischen diesen sogenannten weichen und harten Linsen nehmen die halbharten Linsen ein. Als Basismaterial für halbharte Linsen wird Celluloseacetobutyrat eingesetzt. Die Verträglichkeit ist im allgemeinen besser als bei Polymethylmethacrylat-Hartlinsen auf Grund der besseren Benetzbarkeit, geringeren mechanischen Belastung und höheren Wärmeleitfähigkeit. Unter einer harten bis halbharten Linse wird der Transport der Tränenflüssigkeit nicht so stark gehemmt wie bei einer fest aufliegenden weichen Linse. Von Nachteil ist bei den Celluloseacetobutyrat-Linsen, daß die Materialien oft Weichmacher und Verarbeitungshilfsmittel enthalten, denn Celluloseacetobutyrat ist ohne Zusätze nicht zu verarbeiten. Auch ist Celluloseacetobutyrat optisch nicht vollständig transparent. Ein Teil des Lichtes wird gestreut und dies führt besonders beim Autofahren in der Dunkelheit zum verstärkten Blenden. Es besteht daher ein Bedarf an halbharten optischen Materialien mit geringer Lichtstreuung, die in etwa die Benetzbarkeit und chemische Indifferenz des Celluloseacetobutyrats besitzen.

Es wurde nun gefunden, daß man kontaktoptische Materialien mit ausgezeichneter Verträglichkeit, einer hohen Lichtdurchlässigkeit und geringem Streulichtanteil erhält, wenn man als lichtbrechendes Material halbharte Copolymerisate aus Methacrylsäuremethylester und wasserlöslichen Estern der Acryl- und Methacrylsäure, deren Homopolymerisate eine Glasübergangstemperatur von unter 40° C besitzen, verwendet. Außerdem haben diese Polymere den Vorteil, frei von Weichmachern und Verarbeitungsstabilisatoren zu sein, da bei ihrer thermoplastischen Verarbeitung derartige Zusätze nicht erforderlich sind.

Gegenstand der Erfindung sind Kontaktlinsen und Kontaktschalen aus lichtbrechendem Material aus Copolymerisaten von

I) 40 bis 90 Gew.-% Methacrylsäuremethylester und
II) 10 bis 60 Gew.-% Acrylsäuremethylester und/oder Estern der Formel (1)

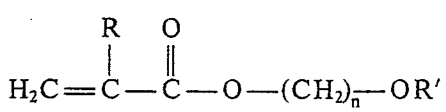

(1)

wobei

R H oder $CH_3$,

R′ $CH_3$ oder $C_2H_5$ und
n 1 oder 2 ist

und die Summe von I und II 100 Gew.-% beträgt.

Geeignete Ester der Formel (1) sind beispielsweise die Methoxymethyl-, Methoxyethyl-, Ethoxymethyl- und Ethoxyethylester der Acryl- und Methacrylsäure.

Solche Copolymerisate besitzen Glasübergangstemperaturen von 40 bis 70°C und ein Wasseraufnahmevermögen von 1,5 bis 6 Gew.-%.

Die erfindungsgemäßen halbharten Kontaktlinsen- oder -schalen zeichnen sich durch ihren hohen Tragekomfort und durch ihre physiologische Indifferenz aus. Sie nehmen nur in geringem Umfang Wasser auf und speichern daher weder Bakterien, Sporen und Pilze noch Stoffwechselprodukte und Sterilisationsmittel. Sie enthalten keine niedermolekularen Zusatzmittel, die auswandern und das Auge schädigen könnten. Die Verwendung von Vulkanisationshilfsmitteln und Füllstoffen ist nicht notwendig. Hervorzuheben ist die gute Benetzbarkeit mit Tränenflüssigkeit und die geringe Fettlöslichkeit.

Die Copolymerisate werden durch bekannte Methoden der Lösungs-, Block- oder Massepolymerisation hergestellt. Bevorzugt werden die Copolymerisate nach der Methode der Massepolymerisation, wie sie in der DE-A-2 724 360 beschrieben ist, hergestellt. Man erhält nach diesem Verfahren chemisch besonders einheitliche Copolymerisate hoher Transparenz.

Die Copolymeren können direkt zu Linsenkörpern verspritzt werden. Man kann auch zunächst erst Rohlinge herstellen und diese spanabhebend bearbeiten und anschließend polieren. Die Verarbeitung zu Augen-Kontaktlinsen oder -Kontaktschalen erfolgt nach herkömmlichen Verfahren durch Spritzguß in Formen, durch Schleuderguß in Formen oder durch Stanzen oder Prägen aus Folien, Pulvern oder Granulaten.

## Beispiele

Die in der Tabelle Nr. 1 angegebenen Monomerengemische werden nach der Methode der in der DE-A-2 724 360 beschriebenen Massepolymerisation polymerisiert. In Tabelle Nr. 2 sind Zusammensetzung und Eigenschaften der Polymerisate aufgeführt.

Tabelle 1

| | Monomerengemisch | | | |
|---|---|---|---|---|
| | A | B | C | D |
| | MAM 60 Gew.-% | MAM 80 Gew.-% | MAM 50 Gew.-% | MAM 70 Gew.-% |
| | AM 40 Gew.-% | AOM 20 Gew.-% | MMOE 50 Gew.-% | MEOE 30 Gew.-% |
| Regler | – | 0,2 Gew.-% Ethylenglykoldithiomercaptoacetat | | |

MAM: Methacrylsäuremethylester
AM: Acrylsäuremethylester
AOM: Acrylsäuremethoxymethylester
MMOE: Methacrylsäure-2-methoxyethylester
MEOE: Methacrylsäure-2-ethoxyethylester

Tabelle 2

| | Polymerisate | | | |
|---|---|---|---|---|
| | A | B | C | D |
| | MAM 83 Gew.-% | MAM 85 Gew.-% | MAM 50 Gew.-% | MAM 45 Gew.-% |
| | AM 17 Gew.-% | AOM 15 Gew.-% | MMOE 50 Gew.-% | MEOE 55 Gew.-% |
| Glasübergangstemperatur a) | 60°C | 55°C | 50°C | 55°C |
| Wasseraufnahme | 2,5 Gew.-% | 3 Gew.-% | 6 Gew.-% | 5 Gew.-% |
| Lichtdurchlässigkeit b), c) | 96% | 97% | 97% | 96% |

a) gemessen durch Differential-Thermoanalyse
b) Celluloseacetobutyrat: 85%
c) gemessen an einer hydratisierten 0,2 mm dicken Kontaktlinse

Die Polymerisate A bis D wurden auf einer Spritzgußmaschine zu Linsenrohlingen verspritzt und diese spanabhebend auf Drehbänken zu Kontaktlinsen und Kontaktschalen, sogenannten Skleralschalen, verarbeitet.

Patienten, die bislang an Polymethylmethacrylat-Linsen oder -Schalen gewohnt waren, stellten eine subjektiv bessere Verträglichkeit und ein angenehmeres Empfinden fest, nachdem die Polymethylmethacrylatlinsen durch die Linsen aus dem Polymerisat A bis D ersetzt worden waren. In Fällen, bei denen infolge von Hornhautverkrümmungen, Hornhautvernarbungen oder Verletzungen des Auges Skleralschalen getragen werden mußten, konnte die Tragedauer mit den Materialien A bis D gegenüber Polymethylmethacrylatschalen um 30 bis 150% verlängert werden. Gegenüber Linsen aus Celluloseacetobutyrat stellten die Patienten eine geringere Blendung fest.

**Patentansprüche**

1. Kontaktlinsen und Kontaktschalen aus lichtbrechendem Material aus Copolymerisaten von

I) 40 bis 90 Gew.-% Methacrylsäuremethylester und
II) 10 bis 60 Gew.-% Acrylsäuremethylester und/oder Estern der Formel (1)

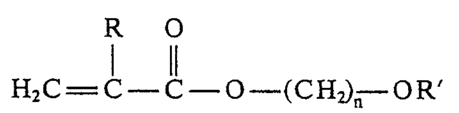

(1)

wobei

R H oder $CH_3$,
R' $CH_3$ oder $C_2H_5$ und
n 1 oder 2 ist

und die Summe von I und II 100 Gew.-% beträgt.

2. Kontaktlinsen und Kontaktschalen gemäß Anspruch 1, aus Copolymerisaten von

I) Methacrylsäuremethylester und
II) Acrylsäuremethylester oder Acrylsäuremethoxymethylester oder Methacrylsäure-2-methoxyethylester oder Methacrylsäure-2-ethoxyethylester.

3. Kontaktlinsen und Kontaktschalen gemäß Anspruch 1, aus Copolymerisaten von

I) Methycrylsäuremethylester und
II) Acrylsäuremethylester.

4. Verwendung von Copolymerisaten aus

I) 40 bis 90 Gew.-% Methacrylsäuremethylester und
II) 10 bis 60 Gew.-% Acrylsäuremethylester und/oder Estern der Formel (1)

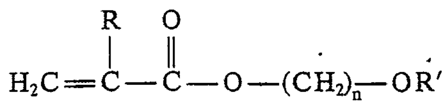 (1)

wobei

R H oder $CH_3$,
R′ $CH_3$ oder $C_2H_5$ und
n 1 oder 2 ist

und die Summe von I und II 100 Gew.-% beträgt, zur Herstellung von Kontaktlinsen und Kontaktschalen.

5. Verwendung von Copolymerisaten aus

I) 40 bis 90 Gew.-% Methacrylsäuremethylester und
II) 10 bis 60 Gew.-% Acrylsäuremethylester oder Acrylsäuremethoxymethylester oder Methacrylsäure-2-methoxyethylester oder Methacrylsäure-2-ethoxyethylester

zur Herstellung von Kontaktlinsen und Kontaktschalen.

6. Verwendung von Copolymerisaten aus

I) 40 bis 90 Gew.-% Methacrylsäuremethylester und
II) 10 bis 60 Gew.-% Acrylsäuremethylester

zur Herstellung von Kontaktlinsen und Kontaktschalen.

**Claims**

1. Contact lenses and contact shells of light-refracting material of copolymers of

I) 40 to 90% by weight of methyl methacrylate and
II) 10 to 60% by weight of methyl acrylate and/or esters of the formula (I)

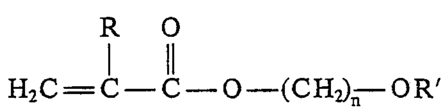 (1)

wherein

R is H or $CH_3$,
R′ is $CH_3$ or $C_2H_5$ and
n is 1 or 2

and the sum of I and II amounts to 100% by weight.

2. Contact lenses and contact shells according to Claim 1, of copolymers of

I) methyl methacrylate and
II) methyl acrylate or methoxymethyl acrylate or 2-methoxyethyl methacrylate or 2-ethoxyethyl methacrylate.

3. Contact lenses and contact shells according to Claim 1, of copolymers of

I) methyl methacrylate and
II) methyl acrylate.

4. Use of copolymers of

I) 40 to 90% by weight of methyl methacrylate and
II) 10 to 60% by weight of methyl acrylate and/or esters of the formula (I)

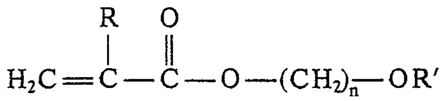
(1)

wherein

R is H or $CH_3$,
R′ is $CH_3$ or $C_2H_5$ and
n is 1 or 2

and the sum of I and II amounts to 100% by weight, for the production of contact lenses and contact shells.

5. Use of copolymers of

I) 40 to 90% by weight of methyl methacrylate and
II) 10 to 60% by weight of methyl acrylate or methoxymethyl acrylate or 2-methoxyethyl methacrylate or 2-ethoxyethyl methacrylate

for the production of contact lenses and contact shells.

6. Use of copolymers of

I) 40 to 90% by weight of methyl methacrylate and
II) 10 to 60% by weight of methyl acrylate

for the production of contact lenses and contact shells.

**Revendications**

1. Lentilles et coquilles de contact en matériau réfringent en copolymères de

I) 40 à 90% en poids de méthacrylate de méthyle et
II) 10 à 60% en poids d'acrylate de méthyle et/ou d'esters de formule (1)

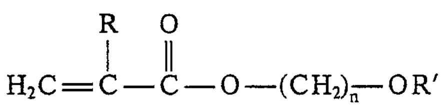
(1)

dans laquelle

R représente H ou $CH_3$,
R′ représente $CH_3$ ou $C_2H_5$ et
n est égal à 1 ou 2

et le total de I et II est de 100% en poids.

2. Lentilles et coquilles de contact selon la revendication 1, en copolymères de

I) méthacrylate de méthyle et
II) acrylate de méthyle ou acrylate de méthoxyméthyle ou méthacrylate de 2-méthoxyéthyle ou méthacrylate de 2-éthoxyéthyle.

3. Lentilles et coquilles de contact selon la revendication 1, en copolymères de

I) méthacrylate de méthyle et
II) acrylate de méthyle.

4. Utilisation de copolymères de

I) 40 à 90% en poids de méthacrylate de méthyle et
II) 10 à 60% en poids d'acrylate de méthyle et/ou d'esters de formule (1)

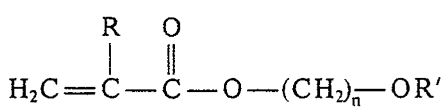
(1)

dans laquelle

R représente H ou $CH_3$,
R′ représente $CH_3$ ou $C_2H_5$ et
n est égal à 1 ou 2

et le total de I et II est de 100% en poids, pour la fabrication de lentilles et coquilles de contact.

5. Utilisation de copolymères de

I) 40 à 90% en poids de méthacrylate de méthyle et
II) 10 à 60% en poids d'acrylate de méthyle ou d'acrylate de méthoxyméthyle ou de méthacrylate de 2-méthoxyéthyle ou de méthacrylate de 2-éthoxyéthyle

pour la fabrication de lentilles et coquilles de contact.

6. Utilisation de copolymères de

I) 40 à 90% en poids de méthacrylate de méthyle et
II) 10 à 60% en poids d'acrylate de méthyle

pour la fabrication de lentilles et coquilles de contact.